# Europäisches Patentamt

## European Patent Office

## Office européen des brevets

(11) Veröffentlichungsnummer: **0 104 268 B1**

(12) **EUROPÄISCHE PATENTSCHRIFT**

(45) Veröffentlichungstag der Patentschrift:
08.01.86

(51) Int. Cl.⁴: **E 05 D 7/10, B 62 D 33/02**

(21) Anmeldenummer: **82108925.7**

(22) Anmeldetag: **27.09.82**

(54) Scharnier für abklappbare und aushängbare Bordwände mit Aushängesicherung.

(43) Veröffentlichungstag der Anmeldung:
**04.04.84 Patentblatt 84/14**

(45) Bekanntmachung des Hinweises auf die Patenterteilung:
**08.01.86 Patentblatt 86/2**

(84) Benannte Vertragsstaaten:
**AT BE CH DE FR GB IT LI LU NL SE**

(56) Entgegenhaltungen:
CH - A - 531 436
DE - A - 2 223 904
DE - C - 2 748 185
FR - A - 1 562 076
FR - A - 2 356 795
FR - A - 2 406 560
FR - A - 2 410 593
GB - A - 795 881
US - A - 1 632 116

(73) Patentinhaber: **F. HESTERBERG & SÖHNE GmbH & Co. KG, Heilenbecker Strasse 50-60, D-5828 Ennepetal 1 (DE)**

(72) Erfinder: **Feinbier, Joachim, Berliner Strasse 65, D-5800 Hagen 7 (DE)**
Erfinder: **Sterner, Bernd, Am Waldesrand 2, D-5800 Hagen 1 (DE)**
Erfinder: **Nieland, Friedhelm, Bohnkampstrasse 40, D-5805 Breckerfeld (DE)**
Erfinder: **Drenhaus, Klaus, Heinrichstrasse 36, D-5828 Ennepetal 1 (DE)**
Erfinder: **Spelsberg, Gerhard, Prentzelstrasse 21, D-5800 Hagen (DE)**
Erfinder: **Breme, Stefan, Bonkampstrasse 27, D-5805 Breckerfeld (DE)**
Erfinder: **Schoring, Albert, Kollenbuscher Weg 13, D-5830 Schwelm (DE)**
Erfinder: **Dretzke, Adolf, Auf dem Knick, D-5810 Witten (DE)**

(74) Vertreter: **Kneissl, Richard, Dr., Patentanwälte Andrae, Flach, Haug, Kneissl Steinstrasse 44, D-8000 München 80 (DE)**

## Beschreibung

Die Erfindung betrifft ein Scharnier für abklappbare und aushängbare Bordwände gemäss dem Oberbegriff des Anspruchs 1.

Bei derartigen Scharnieren sind Aushängesicherungen vorgesehen, die ein Aushängen der Bordwand in hochgeklappten Zustand verhindern, damit die Bordwand beim Fahren nicht herausspringen kann. Die Aushängesicherung ist aber auch erforderlich, wenn ein solches Nutzfahrzeug im Transit verkehrt, damit beim Durchfahren des Transitlandes niemand an das Transportgut gelangen kann, ohne die Zollplomben zu verletzen.

Ein Scharnier der im Oberbegriff des Anspruchs 1 bezeichneten Art ist aus der FR-A Nr. 2410593 bekannt. Das Unterteil weist eine nach oben offene Lagerschale auf, während das Oberteil bügelförmig ausgebildet ist und mit seinen Bügelenden die in die Lagerschale einhängbare Drehachse trägt. Ein Aushängen der Bordwand im hochgeklappten Zustand wird bei diesem Scharnier dadurch verhindert, dass die Drehachse abgeflacht ist und dass die Lagerschale nur über einen Schlitz nach oben offen ist, der um das Mass der Abflachung schmaler ist als der Durchmesser der Drehachse. Bei diesem Scharnier kann das Oberteil zwar nur bei einer bestimmten Abklappstellung aus dem Unterteil ausgehoben werden, jedoch ist ein unbeabsichtigtes Aushängen des Oberteils in dieser Abklappstellung ohne weiteres möglich, beispielsweise wenn beim Abklappen der Bordwand diese auf einer Laderampe, einem Sandhaufen oder sonstwo in Auflage kommt. Dadurch ist die Gefahr von Verletzungen durch unbeabsichtigtes Herausspringen der Bordwand gegeben.

Ein anderes Scharnier für abklappbare und aushängbare Bordwände gemäss dem Oberbegriff des Anspruchs 1 ist aus der DE-C Nr. 2748185 bekannt. Die Aushängesicherung besteht aus einer am Unterteil des Scharniers angebrachten und im eingehängten Zustand koaxial zur Drehachse verlaufenden Achse und aus einem am Oberteil befestigten Haken, der im hochgeklappten Zustand der Bordwand nach vorne offen ist, die Achse von hinten umgreift und bei versuchtem Hochheben der Bordwand von unten gegen die Achse zur Anlage kommt. Auch dieses Scharnier weist den wesentlichen Nachteil auf, dass beim Abklappen der Bordwand der Haken am Oberteil bereits nach einem kleineren Abklappwinkel die zugeordnete Achse nicht mehr hintergreift, so dass von diesem Abklappwinkel an ein unbeabsichtigtes Aushängen der Bordwand möglich ist.

Schliesslich ist ein Scharnier der im Oberbegriff des Anspruchs 1 bezeichneten Art aus DE-A Nr. 2223904 bekannt. Das Oberteil des Scharniers besitzt zwei seitliche, einander gegenüberliegende Lagerzapfen, die in entsprechende Lagerschalen am Unterteil von oben her einhängbar sind. Die Aushängesicherung besteht aus einer Nase, die auf der der Bordwand zugekehrten Seite am Scharnieroberteil angebracht ist, und aus einer Anschlagleiste, die bei geschlossener Bordwand die Nase übergreift. Wird im hochgeklappten Zustand versucht, die Bordwand nach oben wegzuheben, so kommt die Nase an dieser Leiste in Anschlag und verhindert ein Hochheben der Bordwand. Dieses Scharnier ist ebenfalls nicht arbeitssicher. Bereits nach dem Abklappen der Bordwand um einen verhältnismässig kleinen Winkel kommt die Nase mit der Leiste ausser Eingriff, so dass das Oberteil unbeabsichtigt vom Unterteil herausspringen kann.

Eine ähnliche Ausführungsform, die ebenfalls dem Oberbegriff des Anspruchs 1 entspricht, ist aus der DE-C Nr. 2008301 bekannt. Dieses Scharnir besitzt auch seitlich aus dem Oberteil vorspringende Lagerzapfen, die in zwei nach oben offene Lagerschalen am Scharnierunterteil einhängbar sind. Die Aushängesicherung besteht aus hakenförmigen Vorsprüngen am Scharnierunterteil, die die nach oben offenen Lagerschalen übergreifen. Über den Lagerzapfen sind noch weitere Zapfen vorgesehen, die bei hochgeklappter Bordwand von unten an die erwähnten hakenförmigen Vorsprünge anliegen und die bei abgeklappter Bordwand die Lagerschalen untergreifen. Die Bordwand kann also weder im hochgeklappten noch im voll abgeklappten Zustand, sondern nur in waagrechter Lage ausgehängt werden. Aber auch bei dieser Ausführungsform wird beim Abklappen eine völlig ungesicherte Stellung durchlaufen, in der die Bordwand unbeabsichtigt herausspringen kann.

Es ist also ersichtlich, dass bei den bekannten Scharnieren während des Abklappens der Bordwand mindestens eine Stellung durchlaufen wird, bei der die Bordwand unbeabsichtigt herausspringen kann.

Der Erfindung liegt darum die Aufgabe zugrunde, ein Scharnier der im Oberbegriff des Anspruchs 1 bezeichneten Art so weiterzubilden, dass ein unbeabsichtigtes Aushängen der Bordwand ausgeschlossen ist, d. h., dass das Scharnier arbeitssicher ist und auch strengen Unfallverhütungsvorschriften entspricht. Ausserdem sollte das Scharnier so aufgebaut sein, dass bei hochgeklappter Bordwand die Funktionsweise und die Unversehrtheit der Aushängesicherung leicht ersichtlich ist und es somit den Anforderungen der Zollbehörden für den Transitverkehr entspricht.

Diese Aufgabe wird erfindungsgemäss durch die im Kennzeichen des Anspruchs 1 genannten Massnahmen gelöst.

Das Scharnier ist nur bei einer ganz bestimmten Abklappstellung der Bordwand aushängbar, nämlich dann, wenn die Abflachung am Vorsprung mit kreisförmigen Querschnitt der Ausnehmung gegenüberliegt, da in dieser Stellung der Vorsprung nicht in die Ausnehmung eingreift. Aber auch in dieser Stellung ist ein unbeabsichtigtes Aushängen der Bordwand nicht möglich, weil nach dem Hochheben der Bordwand zunächst ein Element des Oberteils an einem Anschlag am Unterteil in Anlage kommt und zum weiteren Aushängen der Bordwand diese seitlich wegbewegt werden muss. Zum Aushängen der Bordwand ist also ein Anheben bis zum Anschlag und dann eine Bewegung der Bordwand im rechten Winkel hierzu erforderlich. Es ist äusserst unwahrscheinlich, dass die nötigen Bewegungen der Bordwand zum Aushängen auf unbeasbsichtigte Weise zustande kommen und die Bordwand dabei herunterfällt.

Wie bereits erwähnt, muss ein Scharnier an einem Nutzfahrzeug, das im Transit verkehrt, eine Aushängesicherung aufweisen, dass beim Durchfahren des Transitlands niemand durch Hochheben der Bordwand unbefugterweise an das Transportgut gelangen kann. Die Zollbehörden fordern deshalb, dass die Funktionsweise und die Unversehrtheit der Aushängesicherung bei hochgeklappter Bordwand ohne weiteres inspiziert werden können. Da die Zollbehörden nicht in der Lage sind, Manipulationen an den verdeckt liegenden Aushängesicherungen der Bordwand zu überprüfen und zu erkennen, haben verschiedene Zollbehörden bereits Nutzfahrzeuge vom Transitverkehr ausgeschlossen, welche Scharniere aufweisen, bei denen die Funktion der das Hochheben der Bordwand verhindernden Mittel nicht einwandfrei ersehen werden kann. Auch in dieser Hinsicht erfüllt das erfindungsgemässe Scharnier voll und ganz die Vorschriften der Zollbehörden.

Die Unteransprüche betreffen bevorzugte Abwandlungen und Ausführungsformen des erfindungsgemässen Scharniers, wie sie in den beigefügten Zeichnungen näher erläutert sind.

In den Zeichnungen zeigen:
Fig. 1 eine Vorderansicht einer ersten Ausführungsform des erfindungsgemässen Scharniers in der Stellung bei hochgeklappter Bordwand;
Fig. 2 einen Schnitt an der Linie II-II von Fig. 1, besehen in Pfeilrichtung;
Fig. 3 eine Vorderansicht des Scharniers von Fig. 1 in der Stellung bei abgeklappter Bordwand;
Fig. 4 einen Schnitt an der Linie IV-IV von Fig. 3;
Fig. 5 eine Vorderansicht einer zweiten Ausführungsform des erfindungsgemässen Scharniers in der Stellung bei abgeklappter Bordwand, und
Fig. 6 eine Vorderansicht einer dritten Ausführungsform des erfindungsgemässen Scharniers in der Stellung bei abgeklappter Bordwand.

In den Ausführungsformen sind identische Teile mit identischen Bezugszeichen versehen.

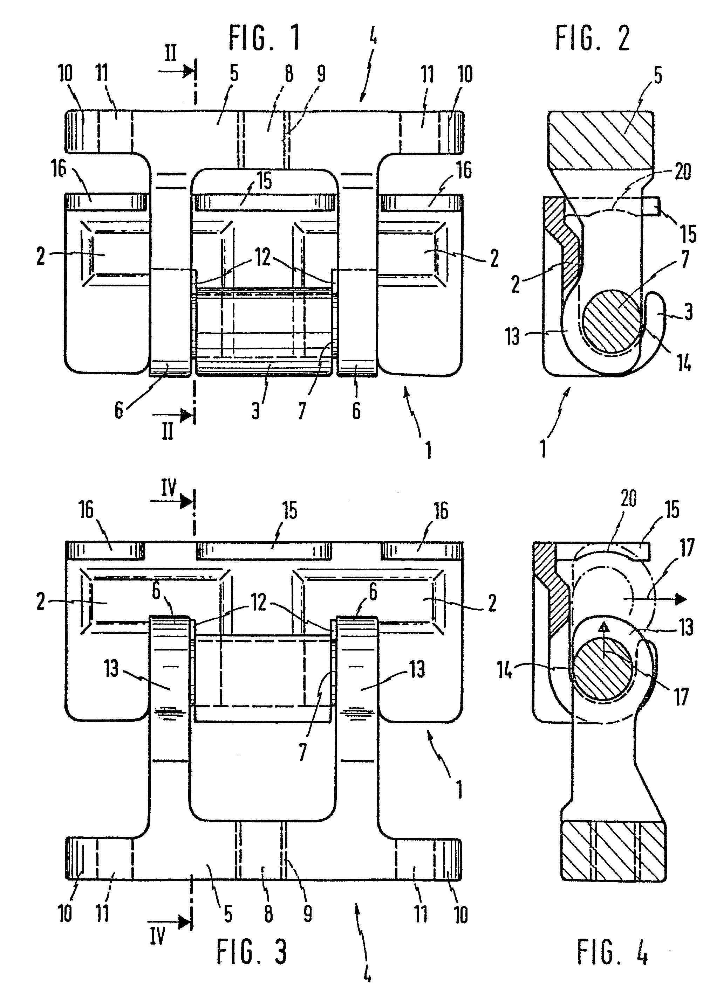

Das in den Fig. 1 bis 4 gezeigte (Anspruch 2 entsprechende) Scharnier besitzt ein Unterteil 1, das zur Versteifung (zum Betrachter gerichtete) Auswölbungen 2 aufweist. An seiner Unterseite ist eine nach vorne abstehende Lagerschale 3 ausgebildet. Das Unterteil wird üblicherweise durch Anschweissen am Fahrzeugrahmen befestigt. Das Scharnier besitzt weiterhin ein Oberteil 4, welches aus einem Bügel 5 besteht, dessen Schenkel 6 zwischen sich eine Drehachse 7 festhalten. Durch den Bügel 5 geht in seinem zwischen den Schenkeln 6 liegenden Teil eine Bohrung 8 mit einem Gewinde 9 hindurch. Diese Bohrung dient zum Anschrauben des Oberteils 4 an die untere Stirnseite einer Bordwand. Das Oberteil 4 weist ausserdem seitliche Fortsätze 10 auf, die Bohrungen 11 besitzen, durch welche weitere Schrauben zum Befestigen an einer Bordwand hindurchgeführt werden können.

Damit das Scharnier nur bei einer bestimmten Abklappstellung der Bordwand ausgehängt werden kann, ist im Unterteil 1 an beiden Bügelschenkeln 6 je ein kreisbogenförmiger, eine sekantenartige Abflachung 14 aufweisender Vorsprung 13 vorgesehen, der jeweils in eine schlitzförmige Ausnehmung 12 im Unterteil 1 eingreift. Bei der dargestellten Ausführungsform ist die Abflachung 14 so angeordnet, dass sie bei hängender Bordwand der entsprechenden schlitzförmigen Ausnehmungen 12 im Unterteil gegenüberliegt (gemäss Anspruch 3). Dies ermöglicht ein Aus- und Einhängen der Bordwand in der bequemsten Abklappstellung. Natürlich ist es auch möglich, die Abflachung 14 so anzuordnen, dass das Scharnier etwa bei halb abgeklappter Bordwand ausgehängt werden kann.

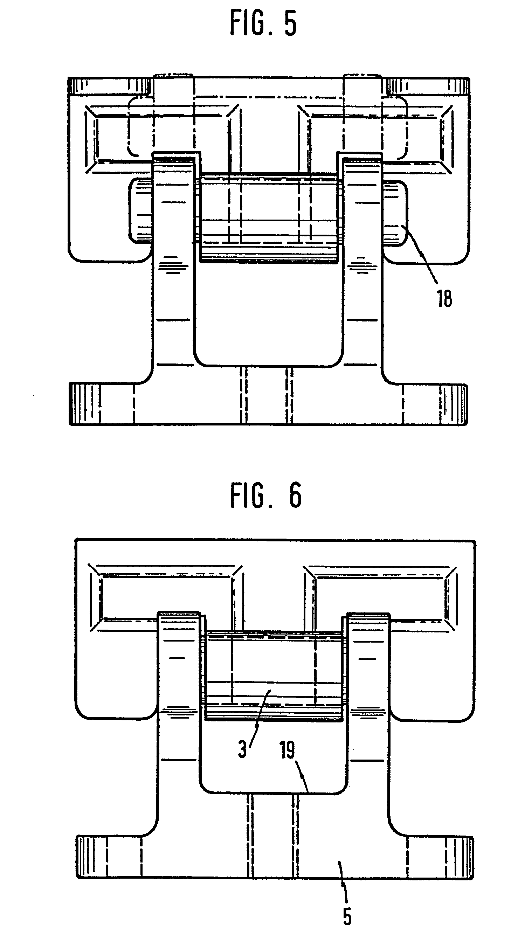

Das Unterteil 1 besitzt als Anschlag an seiner Oberkante eine mittlere Abwinkelung 15 (gemäss Anspruch 4). Wie aus Fig. 4 ersichtlich ist, muss deshalb zum Aushängen der Bordwand dieselbe nicht nur angehoben, sondern nach dem Anheben auch seitlich bewegt werden, wie dies durch Pfeile 17 angedeutet ist.

Bei der in Fig. 5 dargestellten Ausführungsform setzt sich die Drehachse 7 jenseits der Bügelschenkel 6 als Achsstummel 18 fort, wobei an der Oberkante des Unterteils 1 dem Achsstummel gegenüberliegend als Anschläge seitliche Abwinkelungen 16 vorgesehen sind (gemäss den Ansprüchen 5 und 6). Es ist jedoch auch möglich, nur einen Achsstummel 18 und eine seitliche Abwinkelung 16 vorzusehen.

Bei der in Fig. 6 dargestellten Ausführungsform dient die Lagerschale 3 selbst als Anschlag. Der Mittelteil 19 des Bügels 5 ist so dick ausgeführt, dass bei hängender Bordwand der Abstand zwischen diesem Bügelteil 19 und der Unterseite der Lagerschale 3 nur geringfügig grösser ist als die Tiefe der Lagerschale 3 (gemäss Anspruch 7). Beim Aushängen der voll abgeklappten Bordwand kommt dieser Mittelteil 19 des Bügels 5 zunächst an die Unterseite der Lagerschale 3 in Anlage. Zum vollständigen Aushängen muss dann die Bordwand, ähnlich wie bei den anderen vorstehend abgehandelten Ausführungsformen, nach vorne wegbewegt werden.

Als zusätzliche Sicherung ist bei der Ausführungsform nach den Fig. 1 bis 4 an der Unterseite des als Abwinkelung 15 ausgebildeten Anschlags ein Rücksprung 20 vorgesehen (gemäss Anspruch 8), um eventuell einem seitlichen Abgleiten der Drehachse 7 nach einem unbeabsichtigten Anheben der abgeklappten Bordwand entgegenzuwirken.

Die Abwinkelungen 15 und 16 erfüllen noch einen anderen Zweck. Sie decken durch die Bohrungen 8 und 11 hindurchgeführte Befestigungsmittel, z. B. Schrauben oder Nieten, ab, so dass diese bei hochgeklappter Bordwand nicht entfernt werden können (gemäss Anspruch 9). Dies ist wichtig für die Zollsicherheit.

## Patentansprüche

1. Scharnier für abklappbare und aushängbare Bordwände an Nutzfahrzeugen, bestehend aus einem Unterteil (1) mit mindestens einer nach oben offenen Lagerschale (3) und aus einem Oberteil (4) mit je einer in die Lagerschale(n) (3) des Unterteils (1) einhängbaren Drehachse (7), wobei eine Aushängesicherung vorgesehen ist, dadurch gekennzeichnet, dass die Aushängesicherung aus einem zur Drehachse (7) konzentrischen Vorsprung (13) mit kreisförmigem Querschnitt am Oberteil (4) besteht, der in eine Ausnehmung (12) im Unterteil (1) vorspringt, wobei der Vorsprung (13) eine sekantenartige Abflachung (14) besitzt, die bei einer bestimmten Abklappstellung der Ausnehmung (12) im Unterteil (1) gegenüberliegt, so dass in dieser Abklappstellung der Vorsprung (13) nicht in die Ausnehmung (12) im Unterteil (1) vorsteht, und dass am Unterteil (1) ein Anschlag (15) vorgesehen ist, der an ein Element des Oberteils (4) beim Aushängen in Anlage kommt, nachdem die Drehachse (7) geringfügig über die Höhe der Lagerschale (3) angehoben worden ist.

2. Scharnier nach Anspruch 1, dadurch gekennzeichnet, dass das Unterteil (1) nur eine nach oben offene Lagerschale (3) aufweist und dass das Oberteil (4) aus einem Bügel (5) und einer durch die Schenkel (6) des Bügels gehaltenen Drehachse (7) besteht, wobei jeweils ein zur Drehachse (7) konzentrischer, einen kreisbogenförmigen Querschnitt aufweisender Vorsprung (13) an jedem Bügelschenkel (6) vorgesehen ist, dem jeweils eine Ausnehmung (12) in Schlitzform im Unterteil (1) zugeordnet ist.

2. Scharnier nach Anspruch 1 oder 2, dadurch gekennzeichnet, dass die sekantenartige Abflachung (14) bei hängender Bordwand der Ausnehmung (12) im Unterteil (1) gegenüberliegt.

4. Scharnier nach einem der Ansprüche 1 bis 3, dadurch gekennzeichnet, dass der Anschlag aus einer mittleren Abwinkelung (15) an der Oberkante des Unterteils (1) besteht.

5. Scharnier nach einem der Ansprüche 2 bis 4, dadurch gekennzeichnet, dass die Drehachse (7) sich jenseits mindestens eines der Bügelschenkel (6) als Achsstummel (18) fortsetzt und dass der Anschlag als seitliche Abwinkelung (16) an der Oberkante des Unterteils (1) gegenüberliegend dem Achsstummel (18) ausgebildet ist.

6. Scharnier nach Anspruch 5, dadurch gekennzeichnet, dass zwei Achsstummel (18) und zwei seitliche Abwinkelungen (16) vorgesehen sind.

7. Scharnier nach den Ansprüchen 2 und 3, dadurch gekennzeichnet, dass der zwischen den Schenkeln (6) des Bügels (5) liegende Mittelteil (19) bei abgeklappter Bordwand von der Unterseite der Lagerschale (3) einen Abstand aufweist, der geringfügig grösser ist als die Tiefe der Lagerschale (3), so dass die Lagerschale (3) als Anschlag dient.

8. Scharnier nach einem der vorhergehenden Ansprüche, dadurch gekennzeichnet, dass an der Unterseite des Anschlags (15) ein Rücksprung (20) vorgesehen ist.

9. Scharnier nach einem der vorhergehenden Ansprüche, dadurch gekennzeichnet, dass am Unterteil (1) mindestens eine Abdeckung (16) vorgesehen ist, die bei hochgeklappter Bordwand ein Befestigungsmittel, welche durch eine Bohrung (11) im Oberlicht (4) hindurchgeführt ist, abdeckt, derart, dass das Befestigungsmittel nicht entfernt werden kann.

## Claims

1. Hinge for drop-down and detachable tailboard and/or sideboards of commercial vehicles, comprising a lower section (1) with at least one open-top bearing shell (3) and an upper section (4) with hinge pins (7) insertable in each of the bearing shell(s) (3) of the lower section (1), with provision being made for a removal safety device, characterised in that the removal safety device comprises a protrusion (13) from the upper section (4), said protrusion (13) having a circular section concentric to the hinge pin and extending into recess (12) in the lower section (1), and the protrusion having a secant-type flat (14), which at a certain drop-down position is juxtaposed to the recess (12) in the lower section (1), so that in this dropped-down position, the protrusion (13) does not extend into the recess (12) in the lower section (1), and provision being made on the lower section (1) for a stop (15), which comes into contact with an element of the upper section (4) when unhinging, after the hinge pin (7) has been raised slightly above the level of the bearing shell (3).

2. Hinge according to Claim 1, characterised in that the lower section (1) has only one open-top bearing shell (3), and that the upper section (4) comprises a bracket (5) and a hinge pin (7), held by the arms (6) of the bracket (5), each bracket arm (6) having a protrusion (13) with an arcuate cross section concentric to the hinge pin (7) for each of which protrusions a corresponding recess (12) in slot form being provided in the lower section (1).

3. Hinge according to Claim 1 or 2, characterised in that the secant-type flat (14) lies opposite the recess (12) in the lower section (1) when the tailboard or sideboard of the vehicle is hanging.

4. Hinge according to one of Claims 1 to 3, characterised in that the stop consists of a central angular section (15) at the upper edge of the lower section (1).

5. Hinge according to one of Claims 2 to 4, characterised in that the hinge pin (7), on the other side of at least one of the bracket arm(s) (6) is extended in the form of an axle stub (18), and that the stop is designed as a lateral angular section (16) at the top edge of the lower section (1) juxtaposed to the axle stub (18).

6. Hinge according to Claim 5, characterised in that there are two axle stubs (18) and two lateral angular sections (16).

7. Hinge according to Claims 2 and 3, characterised in that the middle section (19) of the bracket (5) lying between the arms (6), when the tailboard or sideboard is dropped down, is at a distance from the underside of the bearing shell (3) which is slightly greater than the depth of the bearing shell (3), so that the bearing shell (3) serves as stop.

8. Hinge according to one of the preceding claims, characterised in that a recess (20) is provided at the underside of the stop (15).

9. Hinge according to one of the preceding claims, characterised in that the lower section (1), provision is made for at least one cover (16) which, when the tailboard or sideboard is hinged-up, a securing segment which passes through a hole (11) in the upper section (4) is covered, such that the securing segment cannot be removed.

## Revendications

1. Charnière pour hayons rabattables et dégondables de véhicules utilitaires, comprenant une partie inférieure (1) munie d'au moins une cuvette de palier (3) ouverte vers le haut, ainsi qu'une partie supérieure (4) présentant un axe respectif de rotation (7) pouvant être accroché dans la ou les cuvettes de palier (3) de la partie inférieure (1), cette charnière étant équipée d'un système antidégondage, charnière caractérisée par le fait que le système antidégondage consiste en une saillie (13) de section circulaire qui, ménagée sur la partie supérieure (4) concentriquement à l'axe de rotation (7), s'engage dans un évidement (12) pratiqué dans la partie inférieure (1), cette saillie (13) possédant un méplat (14) du type pan coupé situé, dans une position rabattue déterminée, en regard de l'évidement (12) ménagé dans la partie inférieure (1), de telle sorte que, dans cette position rabattue, ladite saillie (13) ne s'engage pas dans cet évidement (12) pratiqué dans la partie inférieure (1) ; et par le fait qu'il est prévu, sur la partie inférieure (1), une butée (15) qui, au cours du décrochement, vient s'appliquer contre un élément de la partie supérieure (4) après que l'axe de rotation (7) a été soulevé légèrement au-delà de la hauteur de la cuvette de palier (3).

2. Charnière selon la revendication 1, caractérisée par le fait que la partie inférieure (1) présente seulement une cuvette de palier (3) ouverte vers le haut, et par le fait que la partie supérieure (4) se compose d'un étrier (5) et d'un axe de rotation (7) retenu par l'intermédiaire des branches (6) de cet étrier, chaque branche (6) de l'étrier comportant une saillie respective (13) qui est concentrique à l'axe de rotation (7), présente une section en forme d'arc de cercle et à laquelle est à chaque fois associé un évidement (12) en forme de fente pratiqué dans la partie inférieure (1).

3. Charnière selon la revendication 1 ou 2, caractérisée par le fait que, lorsque le hayon est suspendu, le méplat (14) du type pan coupé se trouve en regard de l'évidement (12) ménagé dans la partie inférieure (1).

4. Charnière selon l'une quelconque des revendications 1 à 3, caractérisée par le fait que la butée consiste en un coudage central (15) façonné à l'arête supérieure de la partie inférieure (1).

5. Charnière selon l'une quelconque des revendications 2 à 4, caractérisée par le fait que l'axe de rotation (7) se prolonge, en tant que bout d'arbre (18), au-delà d'au moins l'une des branches (6) de l'étrier; et par le fait que la butée est réalisée sous la forme d'un coudage latéral (16) façonné à l'arête supérieure de la partie inférieure (1) et situé en regard du bout d'arbre (18).

6. Charnière selon la revendication 5, caractérisée par le fait qu'elle comprend deux bouts d'arbre (18) et deux coudages latéraux (16).

7. Charnière selon les revendications 2 et 3, caractérisée par le fait que, lorsque le hayon est rabattu, la région médiane (19) intercalée entre les branches (6) de l'étrier (5) est espacée, de la face inférieure de la cuvette de palier (3), d'une distance qui est légèrement supérieure à la profondeur de ladite cuvette de palier (3), si bien que cette cuvette de palier (3) sert de butée.

8. Charnière selon l'une quelconque des revendications précédentes, caractérisée par le fait qu'une dépouille (20) est ménagée à la face inférieure de la butée (15).

9. Charnière selon l'une quelconque des revendications précédentes, caractérisée par le fait qu'il est prévu, sur la partie inférieure (1), au moins une pièce de recouvrement (16) qui, lorsque le hayon est relevé, recouvre un moyen de fixation traversant de part en part un trou (11) percé dans la partie supérieure (4), de telle façon que ce moyen de fixation ne puisse pas être enlevé.

FIG. 1

FIG. 2

FIG. 3

FIG. 4

# FIG. 5

# FIG. 6